# EUROPEAN PATENT APPLICATION

(11) **EP 4 703 915 A1**
(43) Date of publication of application: **04.03.2026**
(21) Application number: 24197024.3
(22) Date of filing: 28.08.2024
(51) Int. Cl.: G06F 16/93

(54) **SYSTEM AND METHOD FOR SEMANTIC ENRICHMENT OF DIGITIZED ENGINEERING DIAGRAMS**

(71) Applicant: Siemens Aktiengesellschaft, 80333 München (DE)
(72) Inventor: DONEVA, Aneta, 81373 München (DE); GANESH, Gautam, 560030 Bangalore, Karnataka (IN); JOSHI, Janaki, 85591 Vaterstetten (DE); KAMATH, Yogesh, 560076 Bangalore, Karnataka (IN)
(74) Representative: HKW Intellectual Property PartG mbB

(57) **Abstract**

Disclosed is a method (100) for semantic enrichment of digitized engineering diagrams. The method comprises receiving extracted graphical data from an engineering diagram. The extracted graphical data comprises at least one of symbols, text, and connections. The method further comprises accessing a semantic domain knowledge base comprising domain-specific information. The domain-specific information comprises interpretations of graphical elements and relationships therebetween. The method further comprises enriching the extracted graphical data using the semantic domain knowledge base to generate semantically enriched data, by associating semantic meanings with the graphical elements based on the domain-specific information. The method further comprises mapping the semantically enriched data to a standardized data model, by aligning the semantically enriched data with a vocabulary of a specified standard. The method further comprises outputting a standardized representation of the engineering diagram based on the mapped semantically enriched data.

## Description

The present invention relates generally to the field of digital engineering diagram processing. More specifically, the invention pertains to methods and systems for semantic enrichment of digitized engineering diagrams, such as Piping and Instrumentation Diagrams (P&IDs), electrical drawings, and building plans, using standards-based ontology and domain rules.

In the field of engineering and industrial design, schematic diagrams play an important role in representing complex systems and processes. These diagrams, such as Piping and Instrumentation Diagrams (P&IDs), electrical drawings, and building plans, contain information required for design, construction, and maintenance of industrial facilities and infrastructure. Traditionally, these diagrams have been created and maintained in paper-based formats or as static digital images, limiting their utility in modern digital engineering workflows. With the rise of digitalization in engineering processes, there has been a growing need to convert these schematic diagrams from traditional paper-based or static digital formats into more dynamic, data-rich digital representations. This conversion process, sometimes referred to as brownfield digitalization, involves extracting and digitizing the graphical elements like symbols, text, and lines from existing diagrams using computer vision (CV) and optical character recognition (OCR) methods.

However, current approaches to digitalization often fail to provide meaningful and context-rich digital representations. While existing techniques can successfully extract graphical primitives from diagrams, they typically lack the ability to capture the semantic meaning and relationships inherent in these elements. This limitation results in digital representations that are not significantly more expressive or useful than the original static diagrams. Furthermore, the lack of standardization in the digitalization process leads to heterogeneous and non-standardized graphical information. This heterogeneity creates significant challenges when attempting to exchange or integrate this information between different computer-aided engineering (CAE) systems used by various stakeholders in the engineering process, such as engineering, procurement, and construction (EPC) firms, owner/operators, equipment suppliers, and contractors. The result is a high degree of translation and exchange costs, as well as potential loss or misinterpretation of critical information.

Conventional solutions to this problem have primarily relied on manual processes for semantically annotating data from schematics and importing it into plant engineering software. This approach typically involves multiple iterations between data engineers and domain experts to accurately interpret and annotate the extracted graphical data. Recent advancements in deep learning and object detection have improved the initial extraction of graphical elements from diagrams. Various object detection methods are now used for the detection of symbols in image representations of engineering diagrams, and specialized deep learning methods are employed for text detection and recognition. These improvements have been made possible by the existence of large, labelled datasets in the field of image processing and text recognition.

However, these conventional solutions have several limitations. They require substantial time and resources, increasing the overall cost and duration of engineering projects. The manual annotation process is labour-intensive and prone to human error, potentially leading to inconsistencies or inaccuracies in the digitalized data. Also, while the initial extraction of graphical elements has been improved by machine learning techniques, the step of semantically enriching this extracted information remains largely a manual process, requiring significant involvement from domain experts. Existing technologies focus on asset hierarchy creation or information extraction from engineering diagrams but do not address the need for semantic enrichment based on domain-specific knowledge.

Therefore, there is a need for an automated and efficient solution that can extract graphical elements from engineering diagrams as well as semantically enrich this data based on domain-specific knowledge and standards. The present invention seeks to address these issues by leveraging semantic domain knowledge base, applying semantic reasoning techniques, and mapping the enriched data to standardized data models. This would reduce the manual effort required in the digitalization process, improve the quality of the digitalized data, and enable more efficient information exchange across different engineering systems.

The object of the present invention is achieved by a method for semantic enrichment of digitized engineering diagrams. The method comprises implementing a processing unit for performing various steps. The method comprises receiving extracted graphical data from an engineering diagram. The extracted graphical data comprises at least one of symbols, text, and connections. The method further comprises accessing a semantic domain knowledge base comprising domain-specific information. The domain-specific information comprises interpretations of graphical elements and relationships therebetween. The method further comprises enriching the extracted graphical data using the semantic domain knowledge base to generate semantically enriched data, by associating semantic meanings with the graphical elements based on the domain-specific information. The method further comprises mapping the semantically enriched data to a standardized data model, by aligning the semantically enriched data with a vocabulary of a specified standard. The method further comprises outputting a standardized representation of the engineering diagram based on the mapped semantically enriched data.

In one or more embodiments, enriching the extracted graphical data comprises, first, parsing the extracted graphical data. The method then comprises identifying semantic meanings for elements in the extracted graphical data based on the semantic domain knowledge base. The method further comprises generating a graph-based representation of the engineering diagram.

In one or more embodiments, associating semantic meanings with the graphical elements, first, comprises classifying the text in the extracted graphical data into predefined categories based on the domain-specific information. The method then comprises determining functional attributes of the graphical elements based on the classified text. The method further comprises analysing the symbols in the extracted graphical data to determine spatial relationships and associated systems in the engineering diagram based on the determined functional attributes and the domain-specific information.

In one or more embodiments, the method further comprises performing semantic reasoning on the mapped semantically enriched data to infer additional knowledge, by applying domain-specific rules to the mapped semantically enriched data.

In one or more embodiments, the method further comprises validating the mapped semantically enriched data using constraints specified in the standardized data model.

In one or more embodiments, the semantic domain knowledge base is generated based on one or more of engineering drawing standards, specification documents from a business domain, and legends describing components expected in the engineering diagram.

In one or more embodiments, the specified standard is an industry-specific data exchange standard.

In one or more embodiments, the standardized representation of the engineering diagram is in a format compatible with third-party applications adhering to the specified standard.

The object of the present invention is also achieved by a system comprising one or more processing units and a memory unit communicatively coupled to the one or more processing units. Herein, the memory unit comprises an engineering diagram semantic enrichment module stored in the form of machine-readable instructions executable by the one or more processing units, wherein the engineering diagram semantic enrichment module is configured to perform aforementioned method steps for semantic enrichment of digitized engineering diagrams.

The object of the present invention is further achieved by a computer program product, having machine-readable instructions stored therein, that when executed by the one or more processing units, cause the one or more processing units to perform aforementioned method steps.

Still, other aspects, features, and advantages of the invention are readily apparent from the following detailed description, simply by illustrating a number of particular embodiments and implementations, including the best mode contemplated for carrying out the invention. The invention is also capable of other and different embodiments, and its several details may be modified in various obvious respects, all without departing from the scope of the invention. Accordingly, the drawings and description are to be regarded as illustrative in nature, and not as restrictive.

A more complete appreciation of the present invention and many of the attendant aspects thereof will be readily obtained as the same becomes better understood by reference to the following description when considered in connection with the accompanying drawings:
FIG 1 is a flowchart of a method for semantic enrichment of digitized engineering diagrams, in accordance with one or more embodiments of the present invention;
FIG 2 is a block diagram representation of a system for semantic enrichment of digitized engineering diagrams, in accordance with one or more embodiments of the present invention;
FIG 3 is a schematic diagram illustrating an example of graphical data extraction from an engineering diagram, in accordance with one or more embodiments of the present invention;
FIG 4 is a snippet of exemplary domain knowledge captured in a semantic domain knowledge base, in accordance with one or more embodiments of the present invention;
FIG 5 is a schematic diagram illustrating an example of semantic enrichment using semantic domain knowledge, in accordance with one or more embodiments of the present invention; and
FIG 6 is a schematic diagram illustrating an example of creation of a standardized data model, in accordance with one or more embodiments of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for semantic enrichment of digitized engineering diagrams are disclosed herein. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

For purposes of the present invention, the term "engineering diagrams" includes visual representations used to document and communicate the design, structure, and operation of complex systems in various industries. These diagrams can include, but are not limited to, piping and instrumentation diagrams (P&IDs), electrical drawings, building plans, process flow diagrams (PFDs), electrical schematics, and mechanical drawings. Engineering diagrams typically consist of graphical symbols representing components and equipment, lines or arrows representing connections or flows, and textual annotations providing additional information. While the invention is particularly well-suited for use with and explained generally in context of P&IDs, it should be understood that the principles described herein can be applied to various types of engineering schematics, including but not limited to electrical drawings and building plans.

Herein, the "digitized engineering diagrams" refer to electronic representations of engineering drawings which have been converted from physical or static digital formats into machine-readable data. This digitization process typically involves the extraction of graphical elements including symbols, text, and connections from the original diagrams. The term "semantic" pertains to the meaning and interpretation of these digitized elements within their specific engineering domain; and the term "enrichment" refers to the process of augmenting the basic digitized data with additional layers of information and context. Thus, the "semantic enrichment of digitized engineering diagrams" refers to the process of transforming basic digitized representations of engineering schematics into information-rich, context-aware digital assets.

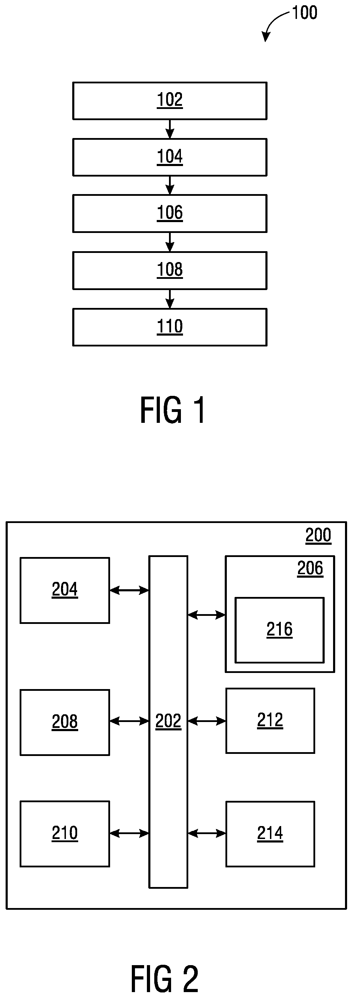

Referring to FIG 1, illustrated is a flowchart of a method (as represented by reference numeral 100) for semantic enrichment of digitized engineering diagrams, in accordance with one or more embodiments of the present invention. The method 100 leverages a standards-based ontology and domain rules to enrich extracted graphical data with semantic meaning, enabling more effective digitalization of engineering schematics in brownfield settings. The method 100 provides a systematic approach to transform basic digitized representations of engineering diagrams into semantically rich, standardized digital assets that can be more effectively utilized in modern engineering workflows.

Referring to FIG 2, illustrated is a block diagram of a system 200 for semantic enrichment of digitized engineering diagrams, in accordance with one or more embodiments of the present invention. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product programmed for semantic enrichment of digitized engineering diagrams. The system 200 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes one or more processing units 204 and one or more memory units 206. Herein, the memory unit 206 is communicatively coupled to the processing unit 204. In an example, the memory unit 206 may be embodied as a computer readable medium on which program code sections of a computer program are saved, the program code sections being loadable into and/or executable in a system to make the system 200 execute the steps for performing the said purpose.

Generally, as used herein, the term "processing unit" refers to a computational element that is operable to respond to and processes instructions that drive the system 200. Optionally, the processing unit includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processing unit" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory unit 206 may be volatile memory and/or non-volatile memory. The memory unit 206 may be coupled for communication with the processing unit 204. The processing unit 204 may execute instructions and/or code stored in the memory unit 206. A variety of computer-readable storage media may be stored in and accessed from the memory unit 206. The memory unit 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processing unit 204 has connectivity to the bus 202 to execute instructions and process information stored in the memory unit 206. The processing unit 204 may include one or more processing cores with each core configured to perform independently. A multi-core processor enables multiprocessing within a single physical package. Examples of a multi-core processor include two, four, eight, or greater numbers of processing cores. Alternatively, or in addition, the processing unit 204 may include one or more microprocessors configured in tandem via the bus 202 to enable independent execution of instructions, pipelining, and multithreading. The processing unit 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The system 200 also includes a database 210. As used herein, the database 210 is an organized collection of structured data, typically stored in a computer system and designed to be easily accessed, managed, and updated. The database 210 may be in form of a central repository of information that may be queried, analysed, and processed to support various applications and business processes. In the system 200, the database 210 provides mechanisms for storing, retrieving, updating, and deleting data, and typically includes features such as data validation, security, backup and recovery, and data modelling.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be in the form of a display, a printer, a communication channel, or the like, without any limitations.

In the present system 200, the processing unit 204 and accompanying components have connectivity to the memory unit 206 via the bus 202. The memory unit 206 includes both dynamic memory (e.g., RAM, magnetic disk, writable optical disk, etc.) and static memory (e.g., ROM, CD-ROM, etc.) for storing executable instructions that when executed perform the method steps described herein for semantic enrichment of digitized engineering diagrams. In particular, the memory unit 206 includes an engineering diagram semantic enrichment module 216 to perform steps for the said purpose.

Referring to FIGS 1-2 in combination, various steps of the method 100 (as described hereinafter), which may be executed in the system 200, or specifically in the processing unit 204 of the system 200, for semantic enrichment of digitized engineering diagrams, are described. It may be appreciated that although the method 100 is illustrated and described as a sequence of steps, it may be contemplated that various embodiments of the method 100 may be performed in any order or different combinations, and need not include all of the illustrated steps.

At step 102, the method 100 includes receiving extracted graphical data from an engineering diagram. As discussed, the engineering diagram may be a Piping and Instrumentation Diagram (P&ID), an electrical drawing, a building plan, or any other type of schematic representation used in industrial engineering and design. Herein, the extracted graphical data comprises at least one of symbols, text, and connections, which are the fundamental elements that make up the engineering diagram. The symbols in the extracted graphical data may represent various components depicted in the engineering diagram, such as equipment, instruments, valves, and other mechanical or electrical devices. For example, in a P&ID, symbols may include representations of pumps, heat exchangers, or control valves. The text in the extracted graphical data may include labels, annotations, or other identifiers associated with the components or processes represented in the engineering diagram. In the context of a P&ID, text may include instrument dimensions (e.g., "10 mm" representing diameter of a pipe), or the like. The connections in the extracted graphical data represent the relationships between different components in the engineering diagram, such as pipes connecting various pieces of equipment in a P&ID, or wires linking components in an electrical diagram. These elements are typically extracted using computer vision (CV) and optical character recognition (OCR) techniques. The extracted graphical data, at this stage, is basically a collection of these graphical elements without inherent semantic meaning or context. This raw extracted graphical data serves as the input for the subsequent semantic enrichment process.

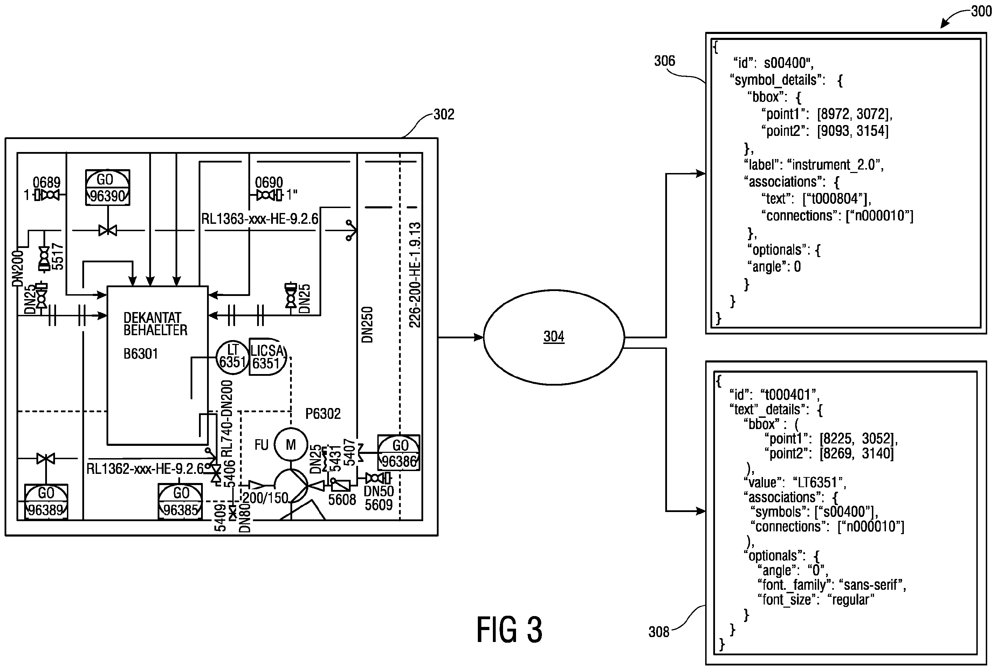

Referring to FIG 3, illustrated is a schematic diagram of a process (as represented by reference numeral 300) for graphical data extraction from an engineering diagram. The process 300 involves extracting graphical elements such as symbols, text, and connections from an engineering diagram using computer vision and optical character recognition techniques. As illustrated, an engineering diagram snippet 302 (from a PDF document or the like) is inputted to an extraction service 304 (as may be executed in the processing unit 204). The extraction service 304, in turn, provides extracted symbol data (as represented by reference numeral 306) and extracted text data (as represented by reference numeral 308). It should be noted that while this extraction process is a prerequisite for the present invention, the specific methods of extraction are not the focus of this invention and may be implemented using various known techniques in the art. The extracted graphical data, as shown in FIG 3, typically lacks business-specific context and semantics. For example, extracted text such as "LT6351", a symbol such as a "single line circle", and a connection such as a "thick dashed line" may not have any semantic meaning. The present invention addresses this limitation by enriching this extracted data with semantic meaning derived from domain-specific knowledge, as discussed in the proceeding paragraphs.

Referring back to FIG 1, at step 104, the method 100 includes accessing a semantic domain knowledge base comprising domain-specific information. The semantic domain knowledge base (hereinafter, sometimes, referred to as "knowledge base") is a structured repository of information that includes expert knowledge about the specific engineering domain relevant to the engineering diagram being processed. The semantic domain knowledge base is constructed using multiple resources, including engineering drawing standards, specification documents from the business domain, and legends describing components expected in the engineering diagram. The domain-specific information, within the semantic domain knowledge base, comprises interpretations of graphical elements and relationships therebetween. For symbols, the knowledge base contains information about what each symbol represents in the context of the engineering domain. For example, in a P&ID, a single line circle may be interpreted as a field instrument with a specific function. The knowledge base also includes information about different text types and their meanings within the engineering context. This may involve interpreting prefixes or suffixes in instrument tags to determine the type and function of the instrument. For instance, "LT" in an instrument tag may be interpreted as "Level Transmitter". The semantic domain knowledge base also contains information about the types of connections that can exist between elements and what these connections signify. In a P&ID, this may include knowledge about different types of process lines, signal lines, or other connections between equipment and instruments. The relationships between different graphical elements are also included in the knowledge base. This may include information about how symbols, text, and connections interact and what these interactions mean in the context of the engineering system. For example, the knowledge base may contain rules about how certain types of instruments are typically connected to specific equipment. The semantic domain knowledge base may also include business logic and constraints that are codified and specific to the engineering domain or even to particular organizations or projects.

In an embodiment, the semantic domain knowledge base is generated based on one or more of engineering drawing standards, specification documents from a business domain, and legends describing components expected in the engineering diagram. Herein, the engineering drawing standards, such as the ISA Standard S5.1 for P&IDs, provide a standardized set of symbols, terminology, and conventions used in specific types of engineering diagrams. These standards are incorporated into the semantic domain knowledge base to ensure that the interpretations of graphical elements align with industry-accepted practices. The specification documents from the business domain may include company-specific standards, project specifications, or industry-specific guidelines that define how certain components or processes should be represented in engineering diagrams. These specifications often contain detailed information about the types of equipment, instruments, and connections used in specific industrial contexts, as well as rules for their representation in diagrams. The legends describing components expected in the engineering diagram are also used to populate the semantic domain knowledge base. These legends provide direct mappings between graphical representations and their meanings, for accurate semantic interpretation.

The process of generating the semantic domain knowledge base involves extracting relevant information from these sources and structuring it in a format that can be accessed and applied during the semantic enrichment process. This may involve creating taxonomies of symbols and their meanings, defining rules for interpreting text elements, and establishing relationships between different components based on standard practices and business-specific requirements. The semantic domain knowledge base is also structured to facilitate efficient querying and reasoning, enabling the semantic enrichment process to quickly access and apply the appropriate domain knowledge to each element of the extracted graphical data. For purposes of the present disclosure, the semantic domain knowledge base may be represented in various forms, such as structured tables or complex graph representations. In general, the semantic domain knowledge base is designed to cover all types of graphical elements and their potential interpretations within the relevant engineering domain.

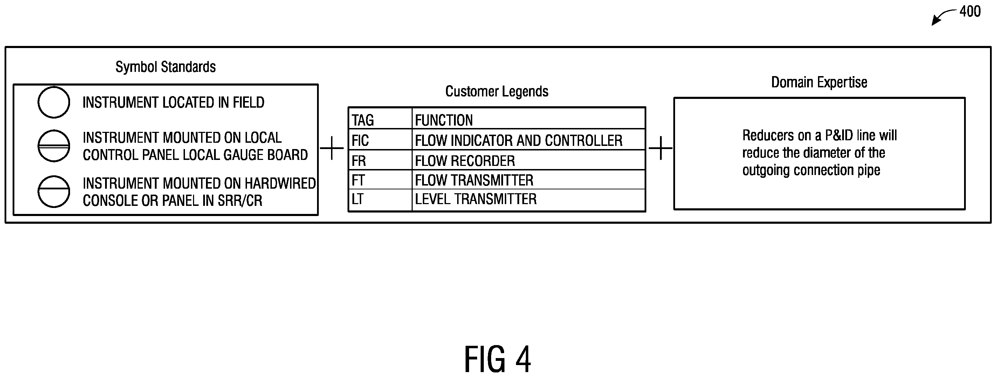

Referring to FIG 4, illustrated is a snippet of domain knowledge captured in a semantic domain knowledge base (as represented by reference numeral 400). The semantic domain knowledge base is generated using multiple resources, including but not limited to engineering drawing standards, specification documents from the business domain, and legends describing components expected in the engineering diagrams. The semantic domain knowledge base primarily consists of information related to symbol types and their interpretations, text types and their meanings, connection types, and the associations between these elements. This categorical knowledge can be captured in various forms, ranging from structured tables to complex graph representations. Additionally, the knowledge base may include business logic and constraints translated into codified rules. Such semantic domain knowledge base is expected to grow with time and get richer and more stable with more applications in the business domain. It may also be noted that a byproduct of building such a knowledge base is then also a way for the business to identify inconsistencies in their data and a means to standardize it.

Referring back to FIG 1, at step 106, the method 100 includes enriching the extracted graphical data using the semantic domain knowledge base to generate semantically enriched data, by associating semantic meanings with the graphical elements based on the domain-specific information. In the present embodiments, the enrichment process may begin by parsing the extracted graphical data, which includes symbols, text, and connections from the engineering diagram. The parsing process organizes this information into a structured format that can be more easily processed in subsequent steps.

For example, each graphical element is analyzed individually and in context with surrounding elements. For symbols, the enrichment process may involve identifying the specific type of component or equipment the symbol represents based on its shape, size, and any associated annotations. The semantic domain knowledge base may be queried to match the extracted symbol with known symbol types and their corresponding meanings in the engineering domain. For example, a circle with an inscribed letter may be identified as a specific type of instrument, such as a pressure transmitter or flow meter.

The enrichment process then involves identifying semantic meanings for elements in the extracted graphical data based on the semantic domain knowledge base. This step utilizes the domain-specific information contained in the knowledge base to interpret the parsed data. For symbols, this process matches the parsed symbol data with known symbol types in the knowledge base, assigning specific meanings or functions to each symbol. For example, a circular symbol may be identified as a specific type of instrument based on its properties and context. The text elements are interpreted using the rules and patterns defined in the knowledge base. This may involve recognizing instrument tags, equipment identifiers, or process parameters based on their structure and content. The connections are analysed to determine their type and purpose within the engineering diagram, such as identifying whether a line represents a process flow, a signal connection, or another type of relationship between components. The enrichment process further comprises generating a graph-based representation of the engineering diagram. This involves creating a structured representation where each identified element (symbol, text, or connection) becomes a node or edge in the graph. Nodes typically represent components or entities in the engineering diagram, while edges represent relationships or connections between these components. The graph structure captures the spatial and logical relationships between elements as defined in the original diagram and interpreted through the semantic domain knowledge base.

In the present embodiments, associating semantic meanings with the graphical elements may include multiple sub-steps. Herein, the text in the extracted graphical data is classified into predefined categories based on the domain-specific information. This classification process involves analysing the structure and content of the text to determine its purpose and meaning. For instance, a string like "LT6351" may be classified as an instrument tag, with "LT" indicating a level transmitter and "6351" representing its unique identifier. The semantic domain knowledge base provides the rules and patterns for interpreting these text elements correctly within the context of the engineering diagram. The connections between symbols are analysed to determine their type and purpose. The semantic domain knowledge base contains information about different types of connections (e.g., process lines, signal lines, electrical connections) and their representations in the engineering diagram. By referring to the semantic domain knowledge base, the association process can determine the nature of each connection and its role in the overall system represented by the engineering diagram.

The association process also involves determining functional attributes of the graphical elements based on the classified text and identified symbols. For example, the process may determine that a particular symbol represents a control valve, and based on associated text and connections, infer its operational parameters, such as normal position (open or closed) or control type (pneumatic or electric). The association process further involves analysing the symbols in the extracted graphical data to determine spatial relationships and associated systems in the engineering diagram based on the determined functional attributes and the domain-specific information. For instance, the process may identify a group of connected symbols as representing a specific subsystem within the engineering diagram. The result of this enrichment process is semantically enriched data, where each graphical element from the original diagram is now associated with contextual information about its meaning, function, and relationships within the overall system represented by the engineering diagram. This semantically enriched data is then used to generate a graph-based representation of the engineering diagram, where nodes represent components and edges represent relationships or connections between components, and with semantic meaning derived from the semantic domain knowledge base.

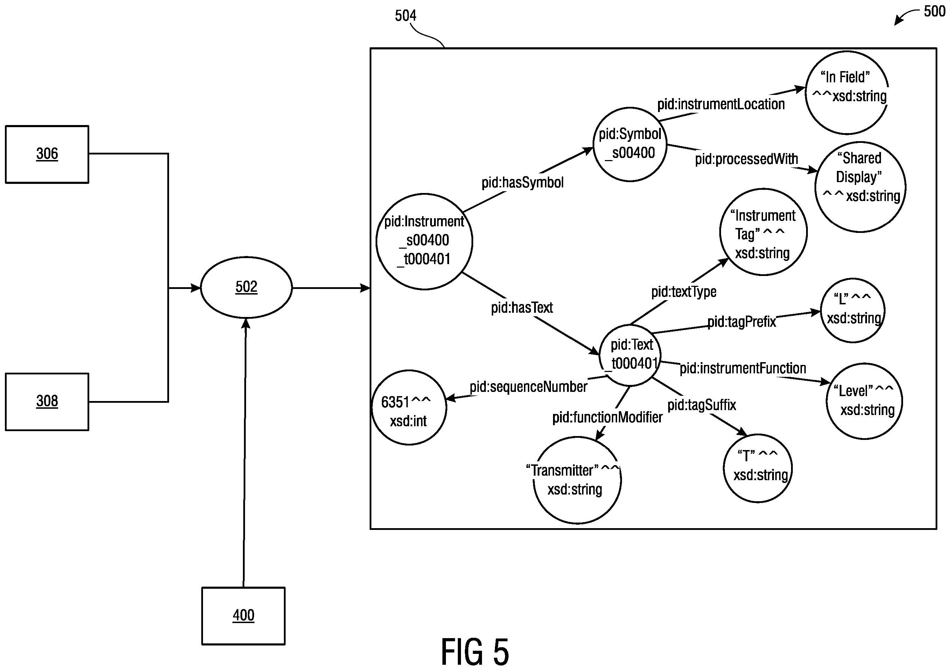

Referring to FIG 5, illustrated is a schematic diagram of a process (as represented by reference numeral 500) for semantic enrichment using semantic domain knowledge. Herien, the extracted graphical data, including the extracted symbol data 306 and the extracted text data 308 (from FIG 3) is parsed and enriched item by item using the semantic domain knowledge base (such as, the knowledge base 400 of FIG 4). The semantic enrichment process may be implemented by an enrichment service 502 (as may be executed in the processing unit 204) and involves several sub-steps. First, the extracted text data 308 is classified into predefined categories based on the domain-specific information in the knowledge base. Using a mapping engine, the Json data is parsed, transformed, and converted into Resource Description Framework (RDF) triples using the knowledge base to bring semantic meaning to the data. For example, the text "LT6351" may be classified as an instrument tag. Next, functional attributes of the graphical elements are determined based on the classified text. In the case of "LT6351", it may be determined that "LT" represents a Level Transmitter, and "6351" is the specific identification number of that instrument instance. The extracted symbol data 306 is then analysed to determine spatial relationships and associated systems in the engineering diagram. This analysis is based on the determined functional attributes and the domain-specific information. For instance, a single line circle symbol may be interpreted as representing an instrument located in the field with a display. The enriched data may, then, be integrated to form a graph-based representation of the engineering diagram (as represented by reference numeral 504). It may be appreciated that representing the information in a graph form also helps in tying together the different graphical objects like symbols and texts as extracted into logical groupings such as instruments, pipes etc. Thereby, the process 500 automates the enrichment of different graphical objects extracted from engineering diagrams, giving them semantic meaning and enabling the development of use-case driven applications downstream.

Referring back to FIG 1, at step 108, the method 100 includes mapping the semantically enriched data to a standardized data model, by aligning the semantically enriched data with a vocabulary of a specified standard. The mapping process begins by identifying the appropriate standardized data model for the type of engineering diagram being processed. This standardized data model provides a common framework and vocabulary for representing the components, attributes, and relationships found in the engineering diagram. The semantically enriched data, which is in the form of a graph-based representation of the engineering diagram, is then systematically compared to the elements defined in the standardized data model. Each node in the graph, representing a component or element from the original diagram, is matched to a corresponding class or concept in the standardized data model.

The specified standard is typically an industry-specific data exchange standard, such as the Data Exchange in the Process Industry (DEXPI) standard for P&IDs. For example, in the case of mapping to the DEXPI standard, an enriched node representing an instrument may be mapped to the "Process Instrument Function" class in the DEXPI model. The attributes associated with each enriched node are also mapped to corresponding attributes or properties defined in the standardized data model. This may involve transforming attribute names or values to conform to the standard vocabulary. The relationships between nodes in the enriched data are mapped to relationship types defined in the standardized data model. This ensures that the connections and associations between components are accurately represented in the standardized format. For example, a connection identified as a signal line in the enriched data may be mapped to a specific type of connection defined in the standardized model.

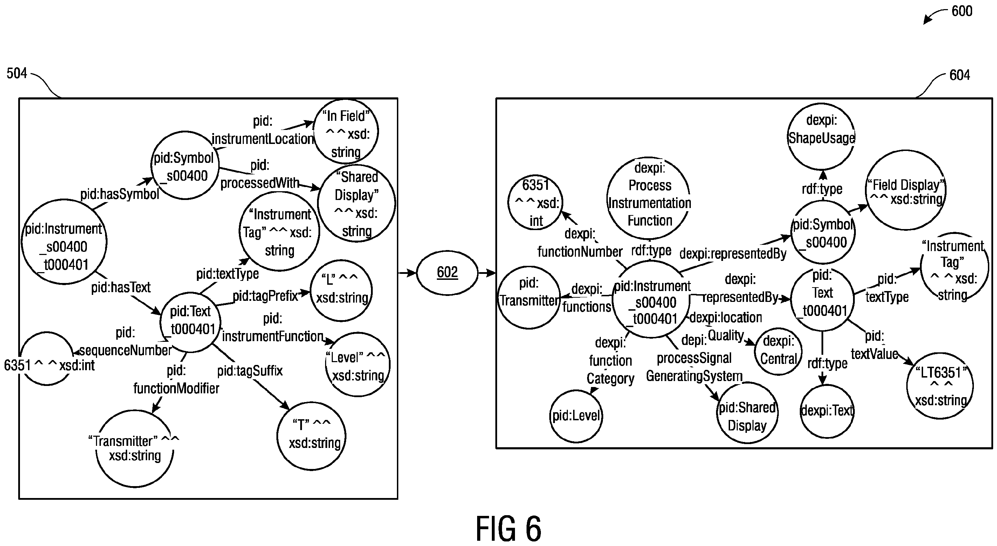

Referring to FIG 6, illustrated is a schematic diagram of an process (as represented by reference numeral 600) for creation of a standardized data model. In the present implementation, after the enrichment process, the enriched data in the form of the graph-based representation of the engineering diagram 504 is mapped to a standardized data model. The process 600 utilizes a specified standard mapping engine 602, such as DEXPI mapping engine for implementing the DEXPI standard as used for P&IDs. The DEXPI standard is often used as the neutral target schema for mapping information extracted from P&IDs. The DEXPI standard consists of several packages, each related to the specific information elements for digital representation of P&ID elements. From these packages, the present implementation utilizes Piping Network System package and Plant Structure Item package. The Piping Network System package covers all relevant information for the representation of the piping in the P&ID diagram. The Piping Network System package includes taxonomy of the different piping components (classes and sub classes of valves) as well as the different types of piping for e.g., Piping network segment, piping connection, etc. The Plant Structure Item package of DEXPI includes the concepts relevant for representing equipment and its associated properties, and can be used to represent equipment from the P&ID snapshot and its properties.

In the process 600, the graph data is aligned with the vocabulary of the DEXPI specification, and the instance data is converted to typed instances based on classes and concepts defined in DEXPI. This step ensures that each element in the resulting standardized representation is properly categorized according to taxonomy of the specified standard. It may be understood that throughout the mapping process, the semantic meanings and relationships established during the enrichment phase are maintained, ensuring that the contextual information is preserved. The output of the process 600 is in the form of a mapping of the semantically enriched data to a standardized data model (as represented by reference numeral 604).

Referring back to FIG 1, at step 110, the method 100 includes outputting a standardized representation of the engineering diagram based on the mapped semantically enriched data. The standardized representation includes all the elements of the original diagram, including symbols, text, and connections, which now include semantic meanings and relationships, and aligned with the vocabulary and structure of the specified standard. Each component in the representation is associated with a standardized class or type, as defined by the industry standard. For example, in a P&ID representation using the DEXPI standard, an instrument might be represented as a "Process Instrument Function" with specific attributes and relationships. The standardized representation preserves the spatial and logical relationships between components as identified during the semantic enrichment process. These relationships are expressed using the standardized vocabulary and data structures defined by the chosen industry standard. The output may be in various formats, such as XML, JSON, or a specialized format defined by the industry standard.

The standardized representation of the engineering diagram is in a format compatible with third-party applications adhering to the specified standard, such as the DEXPI standard for P&IDs. Such standardized representation enables data exchange between different computer-aided engineering (CAE) systems, facilitating interoperability across various stakeholders in the engineering process. This standardized representation allows for more efficient information transfer between engineering, procurement, and construction (EPC) firms, owner/operators, equipment suppliers, and contractors. The standardized representation can be used for various purposes, including automated design verification, simulation and modelling, asset management, and data analytics.

In some embodiments, the method 100 further comprises performing semantic reasoning on the mapped semantically enriched data to infer additional knowledge, by applying domain-specific rules to the mapped semantically enriched data. This semantic reasoning process is applied after the creation of the knowledge graph and the mapping of the semantically enriched data to a standardized data model. The semantic reasoning techniques are used to infer new knowledge based on the contents of the knowledge base and to detect issues with existing captured knowledge. Such process can be accomplished using rules or by programmatically coding business logic.

The semantic reasoning process may involve various levels of inferencing. One level is class level reasoning, which is performed using Web Ontology Language (OWL) axioms. These axioms cover hierarchical relationships, transitivity, and inverse aspects of the data. For example, if equipment A is connected to equipment B, and equipment B is connected to equipment C, the reasoning process may infer that equipment A is indirectly connected to equipment C. There is also a need to supplement the ontology with rules for additional expressivity as compared to OWL. This can be achieved by using SWRL

(Semantic Web Rule Language) which would additionally support property chaining and use of built ins for transformations of data, and thus allows for more complex rules to be applied to the data, enabling more sophisticated inferences to be made. This inferred knowledge enhances the overall understanding of the engineering system represented by the engineering diagram, providing a more complete and accurate representation of components, relationships, and behaviours in the engineering system.

In the present implementations, the semantic reasoning process may apply several types of domain-specific rules during the semantic reasoning process. One type is Instrumentation Signal inference, which involves inferring the presence of an instrument signal line based on the presence of an alarm in the instrument tag code. Furthermore, this inference indicates that a transmitter instrument must also be present to send the alarm to a remote station. Another type of inference is Piping Separative inference, which involves inferring the spawning of new pipe sections or segments depending on the type of equipment placed on the line. For instance, certain equipment like reducers will affect properties of the pipe, specifically the diameter. In contrast, valves simply break the section into different segments without changing the pipe properties.

The semantic reasoning process may also perform subclassing of equipment. This involves classifying generic equipment types into more specific subclasses. For example, generic pump classes may be subclassed into specific types like centrifugal pumps or reciprocating pumps based on additional information in the diagram or knowledge base. Similarly, connection lines may be classified into semantic categories such as main process flow or secondary process flow. This classification can be done based on the graphical primitives associated with the line object in the engineering diagram. The connection between symbols may also be inferenced using the available extracted and associated text and symbol information enriched using domain knowledge.

In some embodiments, the method 100 further comprises validating the mapped semantically enriched data using constraints specified in the standardized data model. This validation process ensures the integrity and correctness of the semantically enriched and mapped data. The constraints used for validation are derived from the domain ontology and the specifications of the standardized data model. These constraints represent rules and relationships that must be adhered to within the specific engineering domain. The validation process serves to identify any incorrect or missing data in the mapped semantically enriched representation of the engineering diagram. For example, in the context of P&IDs, one such constraint may specify that an instrument must always be represented by exactly one symbol and one text object. This type of rule ensures that the semantic representation maintains consistency with established engineering conventions and practices. This rule can be enforced at the time of building the graph using OWL Axioms, or post data population in the graph using Shapes Constraint Language (SHACL) constraints. Through this validation process, the method 100 can detect and flag potential errors or inconsistencies in the semantic representation. This may include identifying missing components, incorrect relationships between elements, or violations of domain-specific rules. The results of this validation can be used to refine the semantic enrichment process, update the domain knowledge base, or alert users to potential issues in the original engineering diagram that require attention.

The method 100 for semantic enrichment of digitized engineering diagrams presents an approach to standardizing and enhancing the representation of engineering schematic drawings. The method 100 of the present invention provides a comprehensive approach, which includes building a semantic domain knowledge base, performing semantic enrichment using domain knowledge, mapping enriched data to a specified standard, and applying graph-based semantic reasoning and inferencing. This process transforms basic extracted graphical data into a standardized representation that captures the elements of the engineering diagram with their semantic meanings and relationships within the broader engineering context.

The method 100 utilizes a semantic domain knowledge base that contains reusable information related to elements from engineering diagrams, such as P&IDs. This knowledge base serves as a foundation for semantically enriching the information extracted from text and symbol extraction services, enabling a deeper understanding of contents of the engineering diagram. The method 100 also maps the semantically enriched data to an existing industry standard to provide a standardized representation of engineering diagrams, that can be readily used in various engineering applications and workflows. This standardization enables interoperability of schematic data transfer across different systems. The method 100 provides a faster, automated solution for mapping data from engineering schematics, significantly reducing the time and manual effort required in traditional approaches.

It may be contemplated by a person skilled in the art that although the present invention has been described primarily in the context of P&IDs, it should be understood that the methods and systems disclosed herein can be applied to various types of engineering diagrams. For example, in the context of electrical drawings, the semantic domain knowledge base may include information about electrical symbols, component types, wiring conventions, and the like. For building plans, the semantic domain knowledge base may include architectural symbols, room types, building code requirements and the like.

While the present invention has been described in detail with reference to certain embodiments, it should be appreciated that the present invention is not limited to those embodiments. In view of the present invention, many modifications and variations may be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

**Reference Numerals**

| | |
|---|---|
| method | 100 |
| step | 102 |
| step | 104 |
| step | 106 |
| step | 108 |
| step | 110 |
| system | 200 |
| bus | 202 |
| processing unit | 204 |
| memory unit | 206 |
| interface | 208 |
| database | 210 |
| input device | 212 |
| output device | 214 |
| engineering diagram semantic enrichment module | 216 |
| process | 300 |
| engineering diagram snippet | 302 |
| extraction service | 304 |
| extracted symbol data | 306 |
| extracted text data | 308 |
| semantic domain knowledge base | 400 |
| process | 500 |
| enrichment service | 502 |
| engineering diagram | 504 |
| process | 600 |
| mapping engine | 602 |
| standardized data model | 604 |

## Claims

1. A method (100) for semantic enrichment of digitized engineering diagrams, comprising implementing a processing unit for:
receiving extracted graphical data from an engineering diagram, wherein the extracted graphical data comprises at least one of symbols, text, and connections;
accessing a semantic domain knowledge base comprising domain-specific information, wherein the domain-specific information comprises interpretations of graphical elements and relationships therebetween;
enriching the extracted graphical data using the semantic domain knowledge base to generate semantically enriched data, by associating semantic meanings with the graphical elements based on the domain-specific information;
mapping the semantically enriched data to a standardized data model, by aligning the semantically enriched data with a vocabulary of a specified standard; and
outputting a standardized representation of the engineering diagram based on the mapped semantically enriched data.

2. The method (100) of claim 1, wherein enriching the extracted graphical data comprises:
parsing the extracted graphical data;
identifying semantic meanings for elements in the extracted graphical data based on the semantic domain knowledge base; and
generating a graph-based representation of the engineering diagram.

3. The method (100) of claim 2, wherein associating semantic meanings with the graphical elements comprises:
classifying the text in the extracted graphical data into predefined categories based on the domain-specific information;
determining functional attributes of the graphical elements based on the classified text; and
analysing the symbols in the extracted graphical data to determine spatial relationships and associated systems in the engineering diagram based on the determined functional attributes and the domain-specific information.

4. The method (100) of claim 1, further comprising performing semantic reasoning on the mapped semantically enriched data to infer additional knowledge, by applying domain-specific rules to the mapped semantically enriched data.

5. The method (100) of claim 1, further comprising validating the mapped semantically enriched data using constraints specified in the standardized data model.

6. The method (100) of claim 1, wherein the semantic domain knowledge base is generated based on one or more of engineering drawing standards, specification documents from a business domain, and legends describing components expected in the engineering diagram.

7. The method (100) of claim 1, wherein the specified standard is an industry-specific data exchange standard.

8. The method (100) of claim 1, wherein the standardized representation of the engineering diagram is in a format compatible with third-party applications adhering to the specified standard.

9. A system (200) comprising:
one or more processing units (204); and
a memory unit (206) communicatively coupled to the one or more processing units (204), wherein the memory unit (206) comprises an engineering diagram semantic enrichment module (216) stored in the form of machine-readable instructions executable by the one or more processing units (204), wherein the engineering diagram semantic enrichment module (216) is configured to perform method (100) steps for semantic enrichment of digitized engineering diagrams, according to any of the claims 1 to 8.

10. A computer-program product having machine-readable instructions stored therein, which when executed by one or more processing units (204), cause the one or more processing units (204) to perform a method (100) according to any of the claims 1 to 8.
